# EUROPÄISCHE PATENTANMELDUNG

(11) **EP 1 132 736 A2**
(43) Veröffentlichungstag der Anmeldung: **12.09.2001**
(21) Anmeldenummer: 00126942.2
(22) Anmeldetag: 08.12.2000
(51) Int. Cl.: G01N 29/24

(54) **Verfahren und Vorrichtung zur zerstörungsfreien Ermittlung der Haftung an Grenzflächen**

(30) Priorität: 01.02.2000 DE 10004212
(71) Anmelder: Fraunhofer-Gesellschaft zur Förderung der angewandten Forschung e.V., 80636 München (DE)
(72) Erfinder: Netzelmann, Udo, Dr., 66113 Saarbrücken (DE)
(74) Vertreter: Gagel, Roland, Dr.

(57) **Zusammenfassung**

Die vorliegende Erfindung betrifft ein Verfahren sowie eine Vorrichtung zur zerstörungsfreien Ermittlung der Haftung an Grenzflächen, bei dem mechanische Spannungsfelder (8) durch lokale Erwärmung an der Grenzfläche (6) erzeugt und das dadurch beeinflusste Reflexions- oder Transmissionsvermögen der Grenzfläche (6) abgefragt wird. Das erfindungsgemäße Verfahren zeichnet sich dadurch aus, dass die mechanischen Spannungsfelder (8) durch periodische Erwärmung erzeugt und ein resultierender periodischer Verlauf des Ultraschallreflexions- oder Transmissionsvermögens mit Ultraschallimpulsen (10) abgefragt wird.

Mit dem Verfahren und der zugehörigen Vorrichtung lassen sich Messungen zur Ermittlung der Haftung an Grenzflächen mit hoher Empfindlichkeit und bei geringen Störeinflüssen durchführen.

## Beschreibung

### Technisches Anwendungsgebiet

Die vorliegende Erfindung betrifft ein Verfahren sowie eine Vorrichtung zur zerstörungsfreien Ermittlung der Haftung an Grenzflächen, bei denen mechanische Spannungsfelder durch lokale Erwärmung an der Grenzfläche erzeugt werden und das dadurch beeinflusste Reflexions- oder Transmissionsvermögen der Grenzfläche abgefragt wird. Aus den abgefragten Werten können Informationen über die Haftung an der Grenzfläche abgeleitet werden.
Das Anwendungsgebiet dieses Verfahrens bzw. der zugehörigen Vorrichtung betrifft in erster Linie die zerstörungsfreie Prüfung von industriellen Beschichtungen. Derartige Beschichtungen können beispielsweise Wärmedämmschichten auf Metallen, Korrosionsschutzschichten auf Metallen, diamantähnliche Schichten auf Metallen oder Lackschichten auf Metallen oder Kunststoffen sein. Die Erfindung lässt sich auch vorteilhaft bei der zerstörungsfreien Prüfung von Verbunden aus Gläsern oder optisch durchsichtigen Werkstoffen und Metallen, Keramiken oder Kunststoffen einsetzen.

### Stand der Technik

Die Prüfung von Materialien auf Schäden mit Hilfe von Ultraschall ist seit langem bekannt. Zur Ermittlung der Haftung an Grenzflächen wurden und werden hierbei vor allem lineare Eigenschaften der Grenzflächen bei der Prüfung ausgenutzt. Zu den eingesetzten Techniken gehört die Bestimmung des akustischen Reflexionskoeffizienten der Grenzflächen, der mit Größen wie dem Berührflächenanteil an den Grenzflächen verknüpft ist. Bei der Prüfung von Beschichtungen werden die linearen Ausbreitungseigenschaften von geführten akustischen Wellen mit der Haftung verknüpft.

Diese linearen Ansätze haben jedoch den Nachteil, dass die Verzerrungen an den Grenzflächen, die bei dieser herkömmlichen Ultraschallprüftechnik auftreten, sehr klein gegenüber den Verzerrungen sind, die beim Versagen der Bindung an den Grenzflächen entstehen. Dies führt dazu, dass diese herkömmlichen Verfahren nicht ausreichend zwischen guter und schlechter Haftung differenzieren können.

Es wurden daher neue Verfahren entwickelt, die nichtlineare Wechselwirkungen eines akustischen Prüfsignals an den Grenzflächen zur Ermittlung der Haftung ausnutzen. So ist aus S. Pangraz et al., Review of Progress in Quantitative Nondestructive Evaluation, Vol. 13, edited by D. O. Thompson and D. E. Chimenti, Plenum Press, New York, 1994, Seiten 1995 - 2001, ein Verfahren bekannt, bei dem schmalbandige Ultraschall-Burst-Pulse von einer Seite auf die Grenzflächen eingestrahlt und auf der gegenüberliegenden Seite wieder empfangen werden. Die Grenzfläche wird hierbei durch das Prüfsignal selbst belastet. Bei der Transmission dieser sinusförmigen Ultraschallwellen mit hohen Amplituden kommt es zur Erzeugung von höheren Harmonischen, die auf der Empfängerseite nachgewiesen und ausgewertet werden. Aus diesen höheren Harmonischen lassen sich wiederum Informationen über die Haftung an den Grenzflächen ableiten.

Ein Nachteil dieser Technik besteht darin, dass mit den Schallein- und Schallauskoppelflächen sowie aufgrund der Volumennichtlinearität auf dem Schallweg durch das Prüfobjekt weitere Quellen von höheren Harmonischen vorliegen, die das Nutzsignal überlagern. Diese Überlagerung beeinträchtigt das Messergebnis. Da bei dieser Technik relativ lange Burst-Pulse verwendet werden, kann nicht zwischen unterschiedlichen voneinander beabstandeten Grenzflächen im Materialverbund unterschieden werden. Weiterhin kommt es durch die erforderlichen langen Prüfimpulse zu stehenden Wellen im Prüfobjekt, so dass das Prüfergebnis empfindlich von den jeweiligen Materialdicken der Fügepartner im Prüfobjekt abhängt.

Aus P. B. Nagy et al., Review of Progress in Quantitative Nondestructive Evaluation, Vol. 9, edited by D. O. Thompson and D. E. Chimenti, Plenum Press, New York, 1990, Seiten 1685 - 1693, ist ein weiteres Verfahren zur Prüfung der Haftung an Grenzflächen bekannt. Bei diesem Verfahren wird über eine Zugmaschine eine externe mechanische Belastung an den Grenzflächen erzeugt und das Schallreflexionsvermögen mit einem Ultraschallprüfsignal abgefragt. Aufgrund dieser externen mechanischen Belastung ergeben sich Verschiebungen von Amplitudenminima als Funktion der Frequenz, die sich im abgefragten Ultraschallsignal widerspiegeln. Daraus können wiederum Informationen über die Haftung an den Grenzflächen abgeleitet werden.

Dieses Verfahren belastet jedoch das gesamte Prüfobjekt und ist an industriellen Komponenten kaum einsetzbar. Durch die periodische Deformation des gesamten Prüfobjektes mit der Prüfmaschine wird auch die Schallübertragung an den Schallkoppelstellen an der Probenoberfläche moduliert, so dass das Messergebnis hierdurch verfälscht werden kann.

In G. Rousset et al., Journal of Applied Physics 57 (9), Mai 1985, Seiten 4396 - 4405, ist ein Verfahren zur Überprüfung der Haftung einer Beschichtung auf einem Substrat beschrieben, bei dem die Beschichtung mit kurzen intensiven Laserpulsen lokal beaufschlagt wird. Durch die Absorption der Laserpulse erfolgt eine lokale Erwärmung der Beschichtung sowie eine daraus resultierende thermische Ausdehnung. Die als Folge dieser thermoelastischen Anregung entstehenden Spannungen an den Grenzflächen führen zu einer lokalen Abhebung der Schicht, die bei diesem Verfahren interferometrisch nachgewiesen und ausgewertet wird.

Ein Nachteil dieses Verfahrens besteht jedoch einerseits in dem Erfordernis einer transienten Delamination der Schicht, die ausreichend sein muss, um mit dem Interferometer nachgewiesen werden zu können. Für diese Delamination ist der Einsatz eines kurzen intensiven Laserpulses erforderlich, der die Grenzflächenhaftung sehr stark belastet. Andererseits ist der Messaufbau mit dem Interferometer sehr aufwendig.

Ein ähnliches Verfahren ist für die Untersuchung eines kompakten Materials auf Ermüdungsrisse bekannt, bei dem es allerdings nicht um die Ermittlung der Haftung zwischen Grenzflächen geht. Bei diesem Verfahren wird mit Hilfe eines gepulsten Hochleistungslasers eine thermoelastische Spannung an der Oberfläche des kompakten Materials erzeugt und mit zwei zeitlich versetzt eingekoppelten Ultraschallimpulsen abgefragt. Der erste Abfrageimpuls muss hierbei im Zeitraum von 20 - 300 µs nach dem Auftreffen des Laserpulses eingekoppelt werden, um die resultierende thermoelastische Spannung zu erfassen. Der zweite Abfrageimpuls wird zu einem deutlich späteren Zeitpunkt, etwa nach 10 ms, eingestrahlt und dient als Referenz. Mit diesem Verfahren kann das Vorhandensein eines im Wesentlichen senkrecht zur Oberfläche des Prüfobjektes verlaufenden Risses erkannt werden.

Die Aufgabe der vorliegenden Erfindung besteht darin, ein Verfahren sowie eine Vorrichtung zur zerstörungsfreien Ermittlung der Haftung an Grenzflächen anzugeben, die eine Messung mit hoher Empfindlichkeit bei geringen Störeinflüssen ermöglicht, einfach zu realisieren sind und die im Zusammenhang mit dem Stand der Technik dargestellten Nachteile nicht aufweisen.

### Darstellung der Erfindung

Die Aufgabe wird mit dem Verfahren und der Vorrichtung der Ansprüche 1 bzw. 10 gelöst. Vorteilhafte Ausgestaltungen des Verfahrens und der Vorrichtung sind Gegenstand der Unteransprüche.

Beim erfindungsgemäßen Verfahren werden mechanische Spannungsfelder an der oder den Grenzfläche(n) im Prüfobjekt induziert und abgefragt. Die mechanischen Spannungsfelder werden hierbei durch lokale Erwärmung eines oder mehrerer Bereiche an bzw. in der Nähe der Grenzflächen erzeugt. Erfindungsgemäß erfolgt die lokale Erwärmung zeitlich periodisch, wobei der resultierende periodische Verlauf der Spannungsfelder an der bzw. den Grenzflächen mit Ultraschallimpulsen abgefragt wird. Das Einbringen der mechanischen Spannungsfelder erfolgt vorzugsweise über einen periodisch in der Intensität modulierten Laserstrahl.

Bei dem erfindungsgemäßen Verfahren wird somit der thermoelastische Effekt ausgenutzt, bei dem durch lokale Erwärmung Temperaturgradienten und - bei Werkstoffen mit von Null verschiedenen thermischen Ausdehnungskoeffizienten - daraus resultierende mechanische Spannungsfelder entstehen. Diese thermoelastisch induzierten Spannungen werden in der Nähe oder direkt am zu prüfenden Bereich des Prüfobjekts eingebracht. Durch die periodische Erwärmung bilden sich auch die mechanischen Spannungen zeitlich periodisch aus. Diese zeitlich periodische Anregung wird mit Hilfe herkömmlicher hochfrequenter Ultraschalltechnik abgefragt. Die Abfrage kann in Reflexion oder in Transmission erfolgen. Die Wiederholrate der Abfrageimpulse an der zu prüfenden Grenzfläche muss zumindest mit dem Zweifachen der Anregungsrate erfolgen, um den periodischen Verlauf der Spannungsfelder erfassen zu können. Vorzugsweise wird die Wiederholrate gross gegenüber der Anregungsrate gewählt und kann insbesondere auch asynchron zu dieser sein.

Bei Einsatz einer Impuls-Echo-Technik in Reflexion wird das Reflexionsecho mit großer Wiederholrate an den zu prüfenden Grenzflächen gemessen (Abfrage). Die Reflexion an den Grenzflächen wird mit dem momentanen Anregungsspannungszustand moduliert. Als Mechanismen für diese Modulation können beispielsweise eine veränderte Zahl oder Ausbildung von elastischen Mikrobrücken an den Grenzflächen oder eine durch den Anregungsspannungszustand erzeugte Verschiebung des Arbeitspunktes auf der Kraft-Abstandskurve der Grenzflächen auftreten. Bei guter Haftung zwischen den Grenzflächen ist diese Modulation gering, bei schlechter Haftung dagegen groß.

Das vorgeschlagene Verfahren stellt aufgrund der thermoelastischen Belastung der Grenzflächen ein nichtlineares Verfahren dar, geht also über die Grenzen der bekannten linearen Prüftechniken hinaus. Die Belastung der Grenzflächen kann beim erfindungsgemäßen Verfahren unabhängig von der Amplitude der abfragenden Ultraschallwellen eingestellt und daher auch unabhängig davon gesteigert werden. Eventuelle Volumennichtlinearitäten bei der Schallausbreitung spielen hierbei keine störende Rolle, da die Abfrage mit geringerer Amplitude erfolgen kann. Durch die Möglichkeit, breitbandige kurze Schallimpulse zur Abfrage einzusetzen, können Dikkenschwankungen der Beschichtung bzw. der Fügepartner bei der Detektion innerhalb der Breite eines Zeitfensters aufgefangen werden. Bei Mehrfachverbunden oder Klebeschichten können einzelne Grenzflächen durch die Position eines derartigen Zeitfensters gezielt selektiert werden. Dies ist mit schmalbandigen langen Schallimpulsen nicht möglich.

Die Ausbildung der thermoelastischen Spannungen sind im Wesentlichen auf den Bereich beschränkt, in dem Temperaturgradienten vorliegen. Dieser Bereich kann bei Einsatz eines Laserstrahls zur Anregung durch Fokussierung der Anregungsstrahlung und Wahl einer geeigneten zeitlichen Dynamik lokal begrenzt werden. Im Vergleich zu einer Anregung des gesamten Prüfstückes wird dadurch vermieden, dass Schallkoppelstellen eine Modulation erfahren und ein störender Signaluntergrund entsteht.

Beim erfindungsgemäßen Verfahren kann die Abfragerate beliebig erhöht werden. Sie ist nicht durch die mögliche Wiederholrate der Anregung festgelegt, sondern wird lediglich durch die Schalllaufzeiten im Prüfobjekt begrenzt. Das ermöglicht einen hohen Durchsatz an Ultraschalleinzelmessungen, der wiederum eine gute Rauschunterdrückung und hohe Nachweisempfindlichkeit auch für kleine Modulationen der Echoamplitude sicherstellt. Gerade ein phasenempfindlicher Nachweis führt hierbei zu sehr guten Ergebnissen. Die Anregung erfordert keine intensiven Laserpulse, da keinerlei transienten Delaminationen der Schichten für den Nachweis erforderlich sind. Das Prüfobjekt ist daher bei Einsatz des erfindungsgemäßen Verfahrens einer geringeren Beschädigungsgefahr ausgesetzt.

Diese Vorteile werden gerade durch die periodische Anregung und die Abfrage des daraus resultierenden zeitlich periodischen Verlaufs der mechanischen Spannungen ermöglicht.

In einer besonders vorteilhaften Ausführungsform wird diese periodische Anregung durch periodische Modulation eines Laserstrahls vorgenommen. Das Tastverhältnis der Modulation, d. h. das zeitliche Verhältnis von hoher Amplitude zu niedriger Amplitude der modulierten Laserstrahlung, liegt vorzugsweise im Bereich zwischen 0,5 : 1 und 1 : 0,5. Die besten Ergebnisse werden bei einer Modulation mit einem Tastverhältnis von 1 : 1 erzielt. Bei diesem Tastverhältnis beträgt die mittlere Leistung der eingestrahlten modulierten Laserstrahlung 50% der Maximalleistung.

Im Gegensatz zu den bekannten Techniken des Standes der Technik, bei denen thermoelastische Spannungen mit Hochleistungslaserpulsen eingebracht werden, liegt die mittlere Leistung der eingestrahlten Laserstrahlung beim erfindungsgemäßen Verfahren höher, die Intensität der Laserpulse jedoch deutlich niedriger.

Der intensitätsmodulierte Laserstrahl wird zur Erzeugung einer ausreichenden Intensität und eines geeigneten Temperaturgradienten mit einer Optik auf bzw. in das Prüfobjekt fokussiert. Die Modulationsfrequenzen liegen hierbei typischerweise im Bereich von 1 Hz bis 10 kHz (NF-Bereich). Die Laserleistung, die Modulationsfrequenz und der Fokussierungsgrad werden so gewählt, dass die thermische Modulation zu ausreichenden mechanischen Spannungen an den Grenzflächen führt. Liegen die Grenzflächen tief unterhalb der Oberfläche des Prüfobjektes, beispielsweise bei so genannten Verbundobjekten, so muss der oben liegende Fügepartner für die einfallende Laserstrahlung optisch transparent sein. Bei der Überprüfung einer Beschichtung auf einem Substrat ist eine derartige optische Transparenz aufgrund der geringen Dicke der Beschichtungen in der Regel nicht erforderlich.

Zur Abfrage dient ein hochfrequentes, gepulstes Ultraschallgerät mit Breitbandimpulsen, die vorzugsweise im Bereich zwischen 10 MHz und 100 MHz (HF-Bereich) liegen. Bei einer Ausführungsform des erfindungsgemäßen Verfahrens wird der Ultraschallprüfkopf dieses Gerätes über ein Koppelmittel von der dem Laser gegenüberliegenden Seite des Prüfobjekts eingeschallt und mit dem selben Prüfkopf das Abfrageecho empfangen. Diese Ausführungsform bietet sich vor allem für die Prüfung der Fügestellen bzw. Grenzflächen dickerer Fügepartner an.

In einer weiteren Ausführungsform des erfindungsgemäßen Verfahrens wird auf der selben Seite des Prüfobjekts, von der auch die Anregung erfolgt, eine elastische Oberflächenwelle angeregt, die von einem Sendeprüfkopf auf einer Seite des untersuchten Bereiches ausgeht. Die Welle durchquert die angeregte Zone und wird von einem Empfangsprüfkopf auf der gegenüberliegenden Seite des zu untersuchenden Bereiches empfangen. Diese Ausführungsform wird vorzugsweise zur Prüfung der Haftung von dünnen Schichten verwendet, wobei die Eindringtiefe der Oberflächenwelle etwas größer gewählt wird als die Schichtdicke. Bei dickeren Beschichtungen kann auch mit einer Volumenwelle in Schrägeinschallung abgefragt werden. Diese Variante der Anregung und Abfrage auf der gleichen Seite des Prüfobjekts hat insbesondere den Vorteil, dass bei der Durchführung des Verfahrens nur ein einseitiger Zugang zum Prüfobjekt erforderlich ist.

Die erfindungsgemäße Vorrichtung zur Durchführung des Verfahrens setzt sich aus einem Laser zur Emission eines Laserstrahls, einem Modulator zur periodischen Modulation der Intensität des Laserstrahls, einer Fokussieroptik zur Fokussierung des Laserstrahls sowie einem Ultraschallsender und -empfänger zur Emission bzw. Detektion von Ultraschallimpulsen zusammen. Bei dem Detektor handelt es sich vorzugsweise um einen Spitzenwertdetektor, der den Messwert bis zur nächsten Abfrage hält. Die Vorrichtung umfasst weiterhin einen phasenempfindlichen Verstärker zur phasenempfindlichen Verstärkung von mit der Modulation periodischen Signalanteilen eines vom Ultraschallempfänger gelieferten Signals. Durch diese phasenempfindliche Detektion lässt sich auch eine geringe Modulation der Ultraschallreflexion bzw. -transmission noch mit hoher Empfindlichkeit nachweisen. Als Laser kommt hierbei insbesondere ein Dauerstrichlaser in Betracht, dessen Laserstrahl durch den in diesem Fall außerhalb des Resonators angeordneten Modulator moduliert wird. Als Modulator können bekannte Elemente des Standes der Technik, wie beispielsweise elektrooptische Modulatoren, eingesetzt werden.

Die Erfindung wird nachfolgend anhand von Ausführungsbeispielen in Verbindung mit den Zeichnungen ohne Beschränkung des allgemeinen Erfindungsgedankens nochmals beispielhaft erläutert. Hierbei zeigen:
- Fig. 1: ein erstes schematisches Beispiel für die Durchführung des erfindungsgemäßen Verfahrens und für die zugehörige Vorrichtung;
- Fig. 2: ein zweites Beispiel für die Durchführung des erfindungsgemäßen Verfahrens und für die zugehörige Vorrichtung; und
- Fig. 3: ein Beispiel für den zeitlichen Verlauf der bei der Durchführung des erfindungsgemäßen Verfahrens eingesetzten bzw. resultierenden Größen.

### Wege zur Ausführung der Erfindung

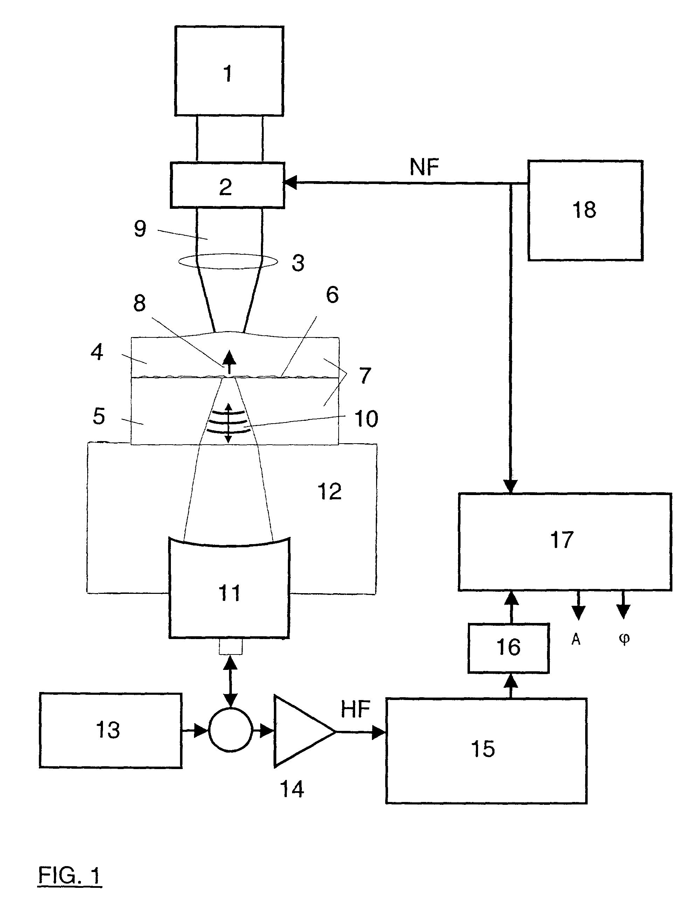

Figur 1 zeigt ein erstes Beispiel einer Anordnung zur Durchführung des erfindungsgemäßen Verfahrens. Das in diesem Falle zu untersuchende Prüfobjekt 7 setzt sich aus den beiden Fügepartnern 4, 5 zusammen, die an einer Grenzfläche 6 aneinander haften. Zur Ermittlung der Haftung an dieser Grenzfläche 6 wird ein Laserstrahl 9 eines Lasers 1 mit einem Modulator 2 in der Intensität moduliert und über eine Fokussieroptik 3 in den oberen Fügepartner 4 fokussiert. Durch diese Fokussierung wird in dem Fügepartner 4 eine thermoelastische Spannung 8 erzeugt, die sich auf die Grenzfläche 6 auswirkt. Die thermoelastische Spannung 8 folgt hierbei zeitlich dem periodischen Verlauf des Laserstrahls 9. Der Modulator 2 für den Laserstrahl wird durch einen Funktionsgenerator 18 im NF-Bereich betrieben.

An der dem Laser 1 gegenüberliegenden Seite des Prüfobjekts 7 wird ein Schallwandler 11 über ein Koppelmittel 12 angekoppelt. Dieser Schallwandler 11 dient sowohl als Sender der abfragenden Ultraschallimpulse wie auch als Empfänger der an der Grenzfläche 6 reflektierten Ultraschallimpulse. Der Schallwandler 11 wird über einen Impulsgenerator 13 betrieben, der die Ultraschallimpulse mit einer gegenüber der Modulationsfrequenz um mindestens den Faktor 2 höheren Frequenz betreibt. Die vom Schallempfänger 11 empfangenen reflektierten Schallimpulse werden über einen Vorverstärker 14 einem Spitzenwertdetektor 15 mit zugehörigem Torgenerator zugeführt. Hier wird aus dem empfangenen Echozug das hochfrequente Abfrageecho von der Grenzfläche zunächst über die elektronische Torschaltung selektiert. Diese Selektion erfolgt, um die von der Grenzfläche reflektierten Abfragesignale 21 von an der Einkoppelfläche reflektierten Signalen 20 und von den Sendesignalen 19 abzutrennen. Die Abfragerate kann beim erfindungsgemäßen Verfahren asynchron zur Anregungsfrequenz sein. Das modulierte Echo der Grenzfläche wird mit Hilfe des Spitzenwertdetektors 15 mit nachfolgendem Halteglied demoduliert. Das NF-modulierte Spitzenwertsignal wird einem Bandpass 16 zugeführt, der die durch Stufen im Spitzenwertsignal erzeugten breitbandigen Transienten im demodulierten Signal unterdrückt. Der mit der Anregungsfrequenz periodische Anteil dieses Signals wird mit Hilfe eines phasenempfindlichen Verstärkers (Lock-In-Verstärker 17) nachgewiesen. Dieser phasenempfindliche Verstärker 17 liefert ein Amplitudensignal A, das ein Maß für die Haftung an der Grenzfläche 6 darstellt sowie ein Phasensignal ϕ, das zusätzliche Informationen über Vorzeichen, Art und Ort der Effekte in der Nähe der Grenzfläche 6 beinhaltet.

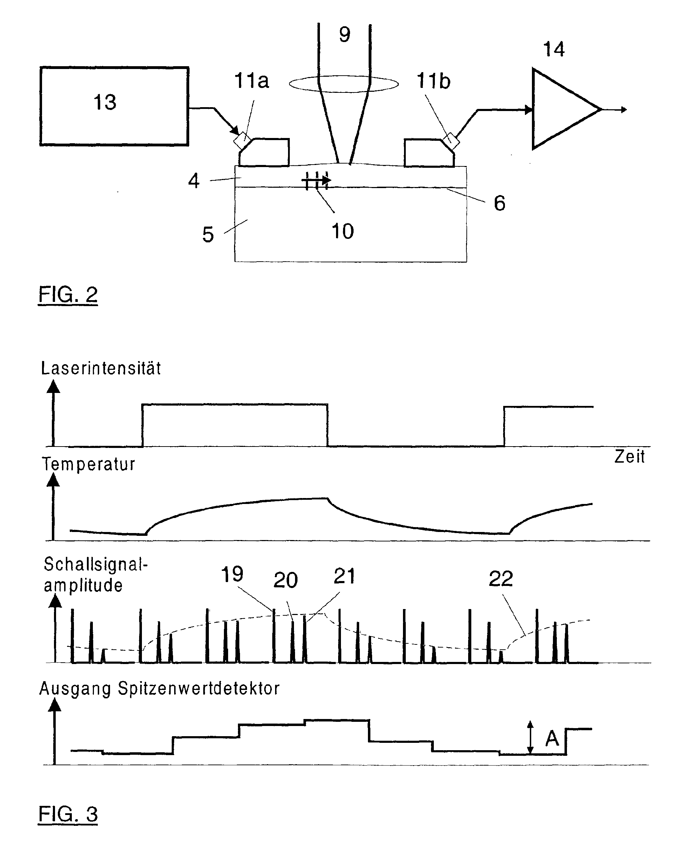

Ein weiteres Beispiel für eine Anordnung zur Durchführung des erfindungsgemäßen Verfahrens ist ausschnittsweise in Figur 2 aufgezeigt. Die hierbei nicht dargestellten Komponenten entsprechen denen der Figur 1. Bei dieser Anordnung wird als Prüfobjekt ein Substrat 5 mit einer darauf haftenden Beschichtung 4 untersucht. Die Anregung erfolgt hierbei in bereits beschriebener Weise durch Einstrahlung eines modulierten Laserstrahls 9 auf die Beschichtung 4. Die hierdurch an der Grenzfläche 6 erzeugten periodischen thermoelastischen Spannungen bzw. deren Auswirkungen auf das Transmissions- oder Reflexionsvermögen der Grenzfläche werden mit Ultraschallimpulsen abgefragt. Die Einkopplung der Ultraschallimpulse erfolgt bei diesem Beispiel an der Oberfläche der Beschichtung 4 mit einem als Sender arbeitenden Schallwandler 11a, der über einen Impulsgenerator 13 in der in Zusammenhang mit Figur 1 beschriebenen Weise angesteuert wird. Beim vorliegenden Beispiel werden in der Beschichtung 4 Oberflächenwellen erzeugt, die das angeregte Gebiet durchqueren. Auf der gegenüberliegenden Seite werden diese Ultraschallimpulse von einem als Empfänger arbeitenden Schallwandler 11b empfangen und über einen Vorverstärker 14 wie in Figur 1 beschrieben weiterverarbeitet. Die mit dem Schallwandler 11a erzeugten Oberflächenwellen haben hierbei eine Eindringtiefe, die größer, aber von gleicher Grössenordnung ist wie die Dicke der Beschichtung 4. Für die Auswertung gelten die gleichen Ausführungen, wie sie bereits in Verbindung mit der Ausführungsform der Figur 1 angeführt wurden.

Figur 3 zeigt schließlich Beispiele für den zeitlichen Verlauf verschiedener Größen, die bei der Durchführung des erfindungsgemäßen Verfahrens eine Rolle spielen. Im oberen Teil der Figur ist ein Beispiel für die Modulation der eingekoppelten Laserstrahlung dargestellt. Aus dieser Figur ist zu erkennen, dass die Laserintensität in Abhängigkeit von der Zeit in diesem Beispiel derart moduliert wird, dass sich ein Tastverhältnis der Modulation von etwa 1 : 1 ergibt. Bei Einstrahlung eines derart modulierten Laserstrahls auf ein Prüfobjekt, wie dies in den Figuren 1 oder 2 dargestellt ist, ergibt sich an der Grenzfläche 6 ein im zweiten Diagramm der Figur 3 schematisch dargestellter zeitlicher Verlauf der Temperatur. Dieser Temperaturverlauf entspricht in seiner Periodizität auch dem zeitlichen Verlauf der mechanischen Spannungen an der Grenzfläche.

Im dritten Diagramm ist schließlich die Schallsignalamplitude der Ultraschallimpulse in Abhängigkeit von der Zeit aufgetragen. Aus diesem Diagramm ist zunächst zu erkennen, dass die Wiederholrate der Sendeimpulse 19 deutlich größer gewählt ist, als die Modulationsfrequenz der eingestrahlten Laserstrahlung. Dies ist erforderlich, um den transienten Verlauf der mechanischen Spannungen an den Grenzflächen mit hoher Genauigkeit erfassen zu können. Vom Schallempfänger werden in diesem Beispiel jeweils zwei Ultraschallimpulse im Anschluss an einen Sendeimpuls empfangen. Der zeitlich erste empfangene Impuls 20 entspricht dem Eintrittsflächenecho bei der Einkopplung der Ultraschallimpulse in das Prüfobjekt. Dieses Eintrittsecho wird durch Wahl eines geeigneten Zeitfensters bei der Torschaltung, wie sie in den vorangehenden Beispielen erläutert wurde, unterdrückt. Das für die Messung wichtige Echo 21 der Grenzfläche 6 beinhaltet die Information über die Modulation der Reflexion der Ultraschallimpulse an der Grenzfläche 6, wie sie in diesem Diagramm schematisch durch die gestrichelte Linie 22 angedeutet ist. Die Torschaltung sorgt dafür, dass lediglich die Signale dieser Grenzflächenechos 21 einem Spitzenwertdetektor 15 zugeführt werden, der das im unteren Diagramm in Abhängigkeit von der Zeit dargestellte Amplitudensignal liefert. Dieses Signal beinhaltet ein Gleichspannungssignal mit überlagertem, sich stufenartig änderndem NF-Anteil. Die Stufen können mit Hilfe eines nachgeschalteten Bandfilters, wie bereits erläutert, unterdrückt werden. Die weitere Vorgehensweise wurde bereits im Zusammenhang mit Figur 1 erläutert.

Bei einer Anwendung des erfindungsgemäßen Verfahrens in einer Ausführungsform, wie sie in Figur 1 dargestellt ist und anhand von Figur 3 prinzipiell erläutert wurde, wurde ein Verbund aus Quarzglas (1 mm dick) und Metall als Prüfobjekt untersucht. Als Anregungslaser 1 wurde ein Argon-Ionen-Laser mit einer Leistung von 1 W und einer Modulationsfrequenz von 10 Hz eingesetzt. Der Laserstrahl fiel von der Seite des Prüfobjektes ein, auf der sich das Quarzglas 4 befindet, und wurde auf der Metalloberfläche des Fügepartners 5 teilweise absorbiert. Unter Verwendung eines fokussierenden 80 MHz-Prüfkopfs wurde das Grenzflächenecho mit einer Abfragerate von 10 kHz detektiert und, wie in Zusammenhang mit Figur 1 beschrieben, nach seinem statischen und modulierten Anteil vermessen. Bei dieser Messung war eine NF-Modulation von bis zu etwa -70 dB der Echohöhe nachweisbar. An räumlich verschiedenen Messpositionen A-F über dem Prüfobjekt ergaben sich die in Tabelle 1 in der rechten Spalte dargestellten Signale. Das thermisch modulierte Signal zeigt deutlich größere relative Unterschiede zwischen den Messstellen als Messungen, die mit einer konventionellen Ultraschall-Reflexionstechnik durchgeführt wurden (mittlere Spalte). Insbesondere war bei den Messstellen E und F, die gut haftende Bereiche darstellen, kein moduliertes Signal nachzuweisen.

**Tabelle 1:**

| Messposition | Reflexionsamplitude konventionell in mV | modulierter Anteil A der Reflexionsamplitude in mV |
|---|---|---|
| A | 620 | 4,0 |
| B | 432 | 2,5 |
| C | 524 | 2,7 |
| D | 620 | 2,0 |
| E | 576 | < 0,2 |
| F | 524 | < 0,2 |

### Bezugszeichenliste

- 1: Laser
- 2: Modulator
- 3: Fokussieroptik
- 4: erster Fügepartner/Beschichtung
- 5: zweiter Fügepartner/Substrat
- 6: Grenzfläche
- 7: Prüfobjekt
- 8: thermoelastische Spannung
- 9: Laserstrahl
- 10: Ultraschallwelle
- 11: Schallwandler (Sender/Empfänger)
- 11a: Sender
- 11b: Empfänger
- 12: Koppelmittel
- 13: Impulsgenerator
- 14: Vorverstärker
- 15: Spitzenwertdetektor mit Torgenerator
- 16: Bandpass
- 17: Lock-In-Verstärker
- 18: Funktionsgenerator
- 19: Sendepuls
- 20: Eintrittsecho
- 21: Grenzflächenecho
- 22: Modulation der Reflexion

## Patentansprüche

1. Verfahren zur zerstörungsfreien Ermittlung der Haftung an Grenzflächen, bei dem mechanische Spannungsfelder (8) durch lokale Erwärmung an der/den Grenzfläche(n) (6) erzeugt werden,
**dadurch gekennzeichnet,**
**dass** die mechanischen Spannungsfelder (8) durch periodische Erwärmung erzeugt und ein resultierender periodischer Verlauf des Ultraschall-Reflexions- oder Transmissionsvermögens an der/den Grenzfläche(n) mit Ultraschallimpulsen abgefragt wird.

2. Verfahren nach Anspruch 1,
**dadurch gekennzeichnet,**
**dass** die die mechanischen Spannungsfelder (8) über einen periodisch in der Intensität modulierten Laserstrahl (9) eingebracht werden.

3. Verfahren nach Anspruch 2,
**dadurch gekennzeichnet,**
**dass** die periodische Modulation des Laserstrahls (9) derart erfolgt, dass dessen mittlere Leistung etwa 50 % der Maximalleistung entspricht.

4. Verfahren nach einem der Ansprüche 1 bis 3,
**dadurch gekennzeichnet,**
**dass** Ultraschallimpulse in einem Frequenzbereich von 10 bis 100 MHz eingesetzt werden.

5. Verfahren nach einem der Ansprüche 1 bis 4,
**dadurch gekennzeichnet,**
**dass** das Abfragen durch Detektion von an der/den Grenzfläche(n) (6) reflektierten Ultraschallimpulsen erfolgt.

6. Verfahren nach einem der Ansprüche 1 bis 4,
**dadurch gekennzeichnet,**
**dass** das Abfragen durch Detektion von an der/den Grenzfläche(n) (6) transmittierten Ultraschallimpulsen erfolgt.

7. Verfahren nach Anspruch 5 oder 6,
**dadurch gekennzeichnet,**
**dass** die reflektierten oder transmittierten Ultraschallimpulse mit einem Spitzenwertdetektor (15) erfasst und ein mit der Erwärmung periodischer Signalanteil mit Hilfe eines phasenempfindlichen Verstärkers (17) extrahiert wird, wobei ein Amplitudensignal und ein Phasensignal erhalten wird.

8. Verfahren nach einem der Ansprüche 1 bis 7,
**dadurch gekennzeichnet,**
**dass** die Ultraschallimpulse mit einer Wiederholrate zur Abfrage eingesetzt werden, die um ein Vielfaches größer als eine reziproke Periodendauer der periodischen Erwärmung ist.

9. Verfahren nach Anspruch 8,
**dadurch gekennzeichnet,**
**dass** die Wiederholrate groß gegen die reziproke Periodendauer der periodischen Erwärmung ist.

10. Vorrichtung zur Durchführung des Verfahrens nach einem der vorangehenden Ansprüche, mit
- einem Laser (1) zur Emission eines Laserstrahls (9);
- einem Modulator (2) zur periodischen Modulation der Intensität des Laserstrahls (9);
- einer Fokussieroptik (3) zur Fokussierung des Laserstrahls (9);
- einem Ultraschall-Sender (11, 11a) und -Empfänger (11, 11b) zur Emission bzw. Detektion von Ultraschallimpulsen (19, 20, 21); und
- einem phasenempfindlichen Verstärker (17) zur phasenempfindlichen Verstärkung von mit der Modulation periodischen Signalanteilen eines vom Ultraschallempfängers gelieferten Signals (11, 11b).

11. Vorrichtung nach Anspruch 10,
**dadurch gekennzeichnet,**
**dass** der Ultraschallsender Breitbandpulse im Frequenzbereich zwischen 10 MHz bis 100 MHz liefert.

12. Vorrichtung nach Anspruch 10 oder 11,
**dadurch gekennzeichnet,**
**dass** zwischen dem Ultraschall-Empfänger (11, 11b) und dem phasenempfindlichen Verstärker ein Spitzenwertdetektor (15) angeordnet ist.
